(19) Europäisches Patentamt
European Patent Office
Office européen des brevets

(11) **EP 3 617 036 B1**

(12) **EUROPÄISCHE PATENTSCHRIFT**

(45) Veröffentlichungstag und Bekanntmachung des Hinweises auf die Patenterteilung:
**18.05.2022   Patentblatt 2022/20**

(21) Anmeldenummer: **19193513.9**

(22) Anmeldetag: **26.08.2019**

(51) Internationale Patentklassifikation (IPC):
**G01L 3/02** (2006.01)    **B62D 5/00** (2006.01)
**B62D 6/10** (2006.01)    **G01L 5/22** (2006.01)

(52) Gemeinsame Patentklassifikation (CPC):
**B62D 5/001; B62D 5/006; B62D 6/10; G01L 3/02; G01L 5/221**

(54) **VORRICHTUNG ZUR MESSUNG EINES DREHMOMENTS IN EINEM FORCE-FEEDBACK-AKTUATOR FÜR EIN STEER-BY-WIRE-LENKSYSTEM**

DEVICE FOR MEASURING TORQUE IN A FORCE FEEDBACK ACTUATOR FOR A STEER-BY-WIRE STEERING SYSTEM

DISPOSITIF DE MESURE D'UN COUPLE DANS UN ACTIONNEUR À RETOUR DE FORCE POUR UN SYSTÈME D'ORIENTATION PAR CÂBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2018   DE 102018214538**

(43) Veröffentlichungstag der Anmeldung:
**04.03.2020   Patentblatt 2020/10**

(73) Patentinhaber: **Volkswagen AG**
**38440 Wolfsburg (DE)**

(72) Erfinder:
• **Kreis, Christopher**
**38126 Braunschweig (DE)**
• **Knopp, Thomas**
**38159 Vechelde (DE)**
• **Marx, Peter**
**38553 Wasbüttel (DE)**
• **Przybylski, Mirko**
**38100 Braunschweig (DE)**
• **Wilske, Ernst**
**39291 Nedlitz (DE)**

(56) Entgegenhaltungen:
**DE-A1- 10 051 187      DE-A1- 10 159 330**
**DE-A1-102014 222 805     DE-A1-102015 015 148**

**Beschreibung**

Die Erfindung betrifft eine Vorrichtung zur Messung eines Drehmoments in einem Force-Feedback-Aktuator für ein Steer-by-Wire-Lenksystem.

Die heute gängige Bauform eines PKW-Lenksystems ist ein elektromechanisch unterstütztes Lenksystem (EPS = Electric Power Steering). Im Zuge der Entwicklung des autonomen Fahrens und der Entwicklung neuer Fahrzeugkonzepte wird die Sicherheitsarchitektur dieser Lenksysteme weiterentwickelt, sodass ein Entfall der mechanischen Verbindung zwischen Lenkrad und Lenksystem möglich sein wird.

Für diese Steer-by-Wire-Systeme ist dann ein zusätzlicher Aktuator notwendig. Dieser Aktuator ist dann dafür verantwortlich, das bekannte Lenkgefühl für den Fahrer am Lenkrad darzustellen. Eine Möglichkeit diese zu realisieren besteht darin, auf einem Steuergerät ein Soll-Lenkmoment zu berechnen und dieses unter Verwendung eines fahrerseitig an der Lenksäule angeordneten elektromechanischen Aktuators (Force-Feedback-Aktuator, FFA) aufzubringen. Dieser kann einen Elektromotor mit oder ohne angeschlossenes Getriebe beinhalten.

Da der Fahrer sehr sensibel auf das Lenkgefühl reagiert, muss der Sollwert mit sehr hoher Genauigkeit eingeregelt werden. Dazu ist eine Messung des Ist-Lenkradmomentes erforderlich. Bereits beim elektromechanischen Lenksystem sind Vorrichtungen zur Messung des Lenkmoments erforderlich.

Aus dem Stand der Technik sind verschiedenste Ansätze rund um die Thematik Steer-by-Wire bis heute vorgestellt worden.

So ist aus der DE 603 03 081 T2 eine gattungsgemäße Vorrichtung zur Messung eines Drehmoments in einem Force-Feedback-Aktuator bekannt. Dabei ist eine durch ein Lager gelagerte Lenkwelle vorgesehen, welche zum Anbringen eines Handrads geeignet ist. Ein Positionssensor erfasst eine Winkelverschiebung der Lenkwelle von einer zentralen Position und erzeugt ein Signal, welches eine solche Winkelverschiebung anzeigt. Ein Elektromotor und ein Getriebe üben ein Drehmoment auf die Lenkwelle aus, um eine Kraftrückmeldung für einen Benutzer bereitzustellen. Dabei ist ein variabler Anschlag so konfiguriert, dass er die Drehung der Lenkwelle an einer beliebigen Stelle stoppt. Eine Messung beziehungsweise Berechnung von einem Drehmoment in Abhängigkeit einer mechanischen Eigenschaft ist dabei nicht vorgesehen.

Aus der US 2002/0108804 A1 ist ein Steer-by-Wire-System als bekannt zu entnehmen. Dieses System verwendet ein semiaktives Stellglied, bei dem ein Radlenkmotor Fahrzeugräder betätigt, wenn ein Lenkrad gedreht wird. Eine Messung beziehungsweise Berechnung von einem Drehmoment in Abhängigkeit einer mechanischen Eigenschaft ist dabei nicht vorgesehen.

Die bekannten Lösungen weisen häufig eine unvorteilhafte Gestaltung des Bauraums auf, insbesondere, wenn sie einen Force-Feedback-Aktuator oder eine alternative Bauweise mit ähnlicher Funktion umfassen. Häufig stoßen die bekannten Lösungen hier an konstruktive Grenzen, welche sich nicht mit einer vorteilhaften Gestaltung des Bauraums eines Force-Feedback-Aktuator vereinbaren lassen.

DE 101 59 330A1, DE 10 2014 222 805 A1 und DE 100 51 187 A1 offenbaren jeweils Reaktionsmomentsimulatoren für ein Lenkrad einer Fahrzeuglenkung. Ein vorgesehener Aktuator wirkt mit einem elastischen Element zusammen, das ein Gegenmoment zu einem vom Fahrer eingebrachtes Moment erzeugt.

Der Erfindung liegt nun die Aufgabe zugrunde, eine Vorrichtung zur Messung eines Drehmoments in einem Force-Feedback-Aktuator für ein Steer-by-Wire-Lenksystem bereitzustellen, welche eine besonders kompakte Bauweise eines Gesamtsystems ermöglicht.

In bevorzugter Ausgestaltung der Erfindung ist vorgesehen, dass eine Vorrichtung zur Messung eines Drehmoments in einem Force-Feedback-Aktuator für ein Steer-by-Wire-Lenksystem bereitgestellt wird. Die Vorrichtung umfasst ein Gehäuseelement, eine Steuereinheit, eine Antriebsvorrichtung, eine Getriebevorrichtung, wobei die Getriebevorrichtung ausgelegt ist mit einer Lenkeinrichtung gekoppelt zu werden, wenigstens einen Bewegungssensor, welcher ausgelegt ist eine Bewegung der Getriebevorrichtung relativ zu dem Gehäuseelement zu detektieren und der Steuereinheit ein aus der Bewegung resultierendes Bewegungssignal bereitzustellen. Dabei ist vorgesehen, dass die Getriebevorrichtung mittels wenigstens einer rückstellreversiblen Verstelleinrichtung mit wenigstens einer mechanischen Eigenschaft an dem Gehäuseelement gekoppelt ist und dass mittels der wenigstens einen mechanischen Eigenschaft, welche bei der Bewegung der Getriebevorrichtung wenigstens einen sich verändernden Zustandswert aufweist, und dem Bewegungssignal ein Drehmoment der Getriebevorrichtung und somit einer verbindbaren Lenkeinrichtung mittels der Steuereinheit ermittelt werden kann. Auf diese Weise ist es möglich, eine Vorrichtung zur Messung eines Drehmoments in einem Force-Feedback-Aktuator für ein Steer-by-Wire-Lenksystem bereitzustellen, welche eine besonders kompakte Bauweise eines Gesamtsystems aufweist. Die einzelnen Komponenten lassen sich beispielsweise ineinander verschachtelt beziehungsweise kompakt funktionell zueinander anordnen, sodass eine zuverlässige Messung bei einer platzsparenden Bauweise gewährleistet wird. So eine Vorrichtung kann beispielsweise bei allen bekannten Steer-by-Wire-Lenksystemen für Personenkraftwagen und Nutzfahrzeugen eingesetzt werden.

Weitere bevorzugte Ausgestaltungen der Erfindung ergeben sich aus den übrigen, in den Unteransprüchen genannten Merkmalen.

In einer weiteren bevorzugten Ausgestaltung der Erfindung ist vorgesehen, dass die rückstellreversible Verstelleinrichtung wenigstens ein Federelement umfasst und die wenigstens eine mechanische Eigenschaft eine Steifigkeit des wenigstens einem Federelements ist. Eine wichtige Eigenschaft solch einer Vorrichtung besteht also darin, dass die Getriebevorrichtung nicht fest an dem Gehäuseelement angebunden ist, sondern zwischen der Getriebevorrichtung und dem Gehäuseelement das wenigstens eine Federelement mit einer bekannten Steifigkeit vorgesehen ist. Ergibt sich im eingebauten Zustand beispielsweise ein Drehmoment zwischen Lenkrad und Elektromotor, welches am Gehäuse beziehungsweise Gehäuseelement abgestützt wird, verdreht sich das Getriebeteil beziehungsweise die Getriebevorrichtung um einen bestimmten Winkel. Da die Federsteifigkeit c_Feder bekannt ist kann nun über die Gleichung

$$M = c\_Feder * Winkel \hspace{3cm} (1)$$

das Drehmoment M berechnet werden. Dazu ist zwischen Gehäuse und Getriebeteil ein Bewegungssensor, beispielsweise in Form eines Winkelsensors, angeordnet, mit dem der Differenzwinkel zwischen den beiden Bauteilen bestimmt und in dem zugeordneten Steuergerät beziehungsweise der Steuereinheit eingelesen wird. Auf diesem Steuergerät kann dann auch, wenn erforderlich, unter Verwendung der bekannten Übersetzungen und gegebenenfalls auch eines Wirkungsgrads das Ist-Lenkmoment berechnet werden. Ein sich verändernder Zustandswert kann also beispielsweise im Zusammenhang mit einer Biegung und/oder Verdrehung des Federelements angesehen werden.

Zudem ist in einer weiteren bevorzugten Ausgestaltung der Erfindung vorgesehen, dass die rückstellreversible Verstelleinrichtung wenigstens zwei Federelemente umfasst und die wenigstens eine mechanische Eigenschaft eine Steifigkeit des jeweiligen einen Federelements ist, wobei mittels einer Gesamtfedersteifigkeit aller Federelemente und dem Bewegungssignal ein Drehmoment der Getriebevorrichtung und somit einer verbindbaren Lenkeinrichtung mittels der Steuereinheit ermittelt werden kann. Eine weitere Besonderheit der vorgestellten Vorrichtung besteht also darin, dass sich die Gesamtfedersteifigkeit aus der Steifigkeit mehrerer beispielsweise auf einem Umfang der Vorrichtung angeordneter Federn ergibt. Auf diese Weise können sich weitere Vorteile hinsichtlich einer kompakten Bauweise ergeben, da beispielsweise die einzelnen Federelemente entsprechend ihrer Gesamtanzahl in Größe und Ausprägung angepasst werden können.

Auch ist in einer weiteren bevorzugten Ausgestaltung der Erfindung vorgesehen, dass der wenigstens eine Bewegungssensor ein Winkelsensor ist. Somit lässt sich besonders einfach und direkt eine gewünschte Berechnung durchführen.

Ferner ist in einer weiteren bevorzugten Ausgestaltung der Erfindung vorgesehen, dass das Gehäuseelement wenigstens ein Anschlagelement umfasst, wobei das Anschlagelement ausgelegt ist bei einem erreichten maximalen Auslenkungswert der rückstellreversiblen Verstelleinrichtung diese in einer benutzerdefinierten Position zu blockieren. Es können also weiterhin die Bauteile so gestaltet sein, dass ab einem sich aus der gewählten Federsteifigkeit ergebenden Moment und damit beispielsweise ab einem bestimmten Torsionswinkel ein Kontakt (ein oder mehrere definierte Anschläge am Gehäuse) entsteht, der dazu führt, dass bei diesem maximal messbaren Moment keine weitere Verdrehung erfolgen kann. So kann die Belastung der Federn nach oben hin begrenzt werden. Weiterhin wird damit auch die obere Grenze des Messbereichs festgelegt.

Des Weiteren ist in einer weiteren bevorzugten Ausgestaltung der Erfindung vorgesehen, dass die Steuereinheit ausgelegt ist einen Getriebewirkungsgrad bei der Ermittlung des Drehmoments der Getriebevorrichtung und somit einer verbindbaren Lenkeinrichtung zu berücksichtigen. In einer Ausführungsform der Vorrichtung wird also die Gleichung (1) zur Berechnung des Drehmoments so erweitert, dass auch ein Getriebewirkungsgrad sowie gegebenenfalls eine nichtlineare Federkennlinie berücksichtigt wird:

$$M(Winkel) = c\_Feder(Winkel) * Winkel * Wirkungsgrad \hspace{2cm} (2)$$

Auch ist in einer weiteren bevorzugten Ausgestaltung der Erfindung vorgesehen, dass die Getriebevorrichtung ein Hohlradelement umfasst. Die zuvor genannten Vorteile lassen sich somit noch besser erreichen.

Ferner ist in einer weiteren bevorzugten Ausgestaltung der Erfindung vorgesehen, dass der Winkelsensor an dem Gehäuseelement angeordnet ist, sodass eine Bewegung der Getriebevorrichtung relativ zu dem Gehäuseelement detektierbar ist. Die zuvor genannten Vorteile lassen sich somit noch besser erreichen.

Des Weiteren ist in einer weiteren bevorzugten Ausgestaltung der Erfindung vorgesehen, dass das Federelement eine Formblattfeder ist, wobei eine Geometrie der Formblattfeder in wenigstens einem Teilbereich an wenigstens ein Teilbereich einer Geometrie einer Anlagefläche des Gehäuseelements angepasst ist, sodass eine Belastung der Formblattfeder in Abhängigkeit von einer Verdrehung der Formblattfeder beeinflusst wird. Durch die Gestaltung wir die Belastung der Federn in Abhängigkeit von der Verdrehung beeinflusst. Damit hat diese Formgebung einen Einfluss auf die resultierende Federkennlinie, da je nach Gestaltung die Federn beziehungsweise Federelemente in Abhängigkeit von der Verdrehung bei unterschiedlichen Drehwinkeln anliegen und dadurch wieder entlastet werden. Eine solche Gestaltung kann insbesondere Details aufweisen, wie sie in der Figurenbeschreibung näher dargestellt sind.

Schlussendlich ist in einer weiteren bevorzugten Ausgestaltung der Erfindung vorgesehen, dass das Federelement entweder eine Schraubfeder oder eine Formblattfeder ist. Die zuvor genannten Vorteile lassen sich somit noch besser erreichen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:

Figur 1     ein Steer-by-Wire-System ohne Lenkzwischenwelle;

Figur 2     schematische Aufbauskizze einer Vorrichtung zur Messung eines Drehmoments in einem Force-Feedback-Aktuator für ein Steer-by-Wire-Lenksystem;

Figur 3     perspektivische Ansicht einer Vorrichtung zur Messung eines Drehmoments in einem Force-Feedback-Aktuator für ein Steer-by-Wire-Lenksystem;

Figur 4     Explosionsdarstellung einer Vorrichtung zur Messung eines Drehmoments in einem Force-Feedback-Aktuator für ein Steer-by-Wire Lenksystem;

Figur 5     Detailansicht einer Vorrichtung zur Messung eines Drehmoments in einem Force-Feedback-Aktuator für ein Steer-by-Wire Lenksystem.

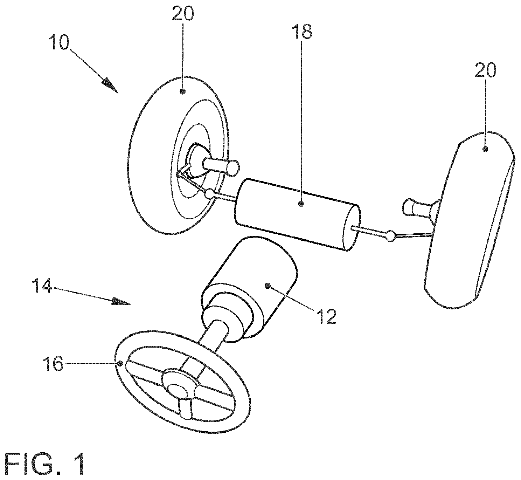

Figur 1 zeigt ein Steer-by-Wire-System 10 ohne Lenkzwischenwelle. Dies Steer-by-Wire-System 10 weist einen Lenkradaktor 12 auf, welcher mit einer Lenkeinrichtung 14 gekoppelt ist. Dieser Lenkradaktor 12 kann beispielsweise einen nicht näher dargestellten Force-Feedback-Aktuator umfassen. Die Lenkeinrichtung 14 weist zudem ein Lenkrad 16 auf. Im Hintergrund dieser perspektivischen Zeichnung ist zudem ein Radaktor 18 zu erkennen, wobei an jeweiligen Enden Räder 20 angeordnet sind.

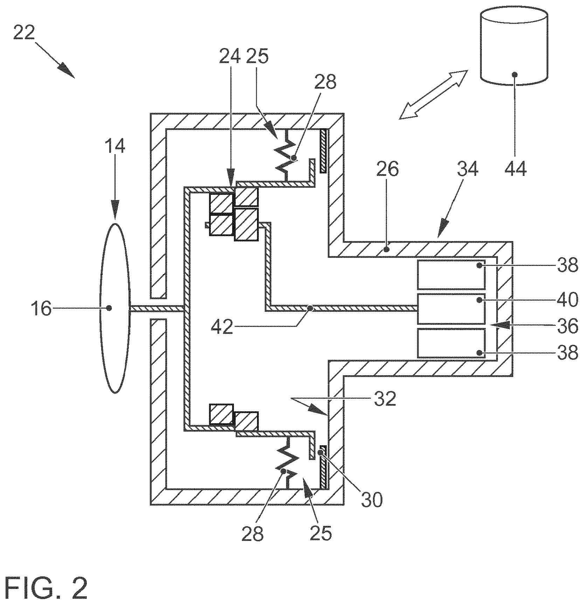

Figur 2 zeigt eine schematische Aufbauskizze einer Vorrichtung 22 zur Messung eines Drehmoments in einem Force-Feedback-Aktuator für ein Steer-by-Wire-Lenksystem 10. Die Vorrichtung 22 weist eine Getriebevorrichtung 24 auf, welche innerhalb eines Gehäuseelements 26 angeordnet ist. Dabei ist die Getriebevorrichtung 24 mittels einer rückstellreversiblen Verstelleinrichtung 25, welche zwei Federelemente 28 umfasst, an das Gehäuseelement 26 angeordnet. Die Federelemente 28 können als rückstellreversible Verstelleinrichtung angesehen werden. Des Weiteren ist ein Bewegungssensor 30 zu erkennen, welcher beispielsweise ein Winkelsensor sein kann. Dieser Bewegungssensor 30 ist dabei auf einer Innenseite 32 von dem Gehäuseelement 26 vorgesehen. Bezogen auf die Bildebene ist auf der rechten Seite in einem Verjüngungsbereich 34 des Gehäuseelements 26 eine Antriebsvorrichtung 36 zu erkennen. Die gezeigte Antriebsvorrichtung 36 ist als Elektromotor dargestellt und umfasst sowohl einen Stator 38 als auch einen Rotor 40. Die Antriebsvorrichtung 36 ist mit einer Kopplungseinrichtung 42 funktionell mit der Getriebevorrichtung 24 verbunden. Außerhalb des Gehäuseelements 26 ist links bezogen auf die Bildebene eine Lenkeinrichtung 14 mit einem Lenkrad 16 zu erkennen. Ferner ist eine Steuereinheit 44 zu erkennen, wobei ein Doppelblockpfeil die funktionelle Zugehörigkeit zur Vorrichtung 22 andeutet.

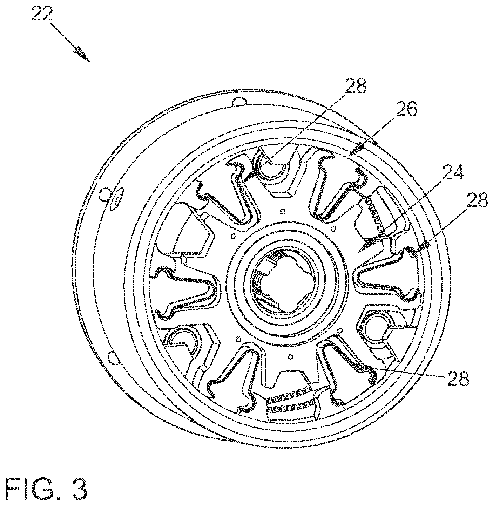

Figur 3 zeigt eine perspektivische Ansicht einer Vorrichtung 22 zur Messung eines Drehmoments in einem Force-Feedback-Aktuator für ein Steer-by-Wire-Lenksystem 10. Zu erkennen ist ein Gehäuseelement 26, in welchem eine Getriebevorrichtung 24 angeordnet ist. Dabei ist die Getriebevorrichtung 24 mittels einer Vielzahl von Federelementen 28 an dem Gehäuseelement 26 angeordnet. Die einzelnen Federelemente 28 sind dabei gleichmäßig auf einem Umfang der Vorrichtung 22 beziehungsweise zwischen Getriebevorrichtung 24 und Gehäuseelement 26 vorgesehen. Die gezeigten Geometrien und Maße sind dabei nur beispielhaft gezeigt und können beliebig variiert werden, solange die Funktionalität der Vorrichtung 22 dabei gewährleistet bleibt.

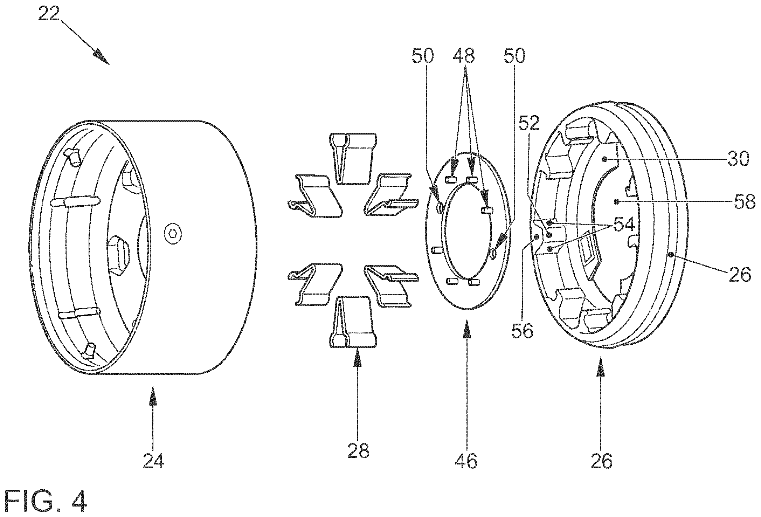

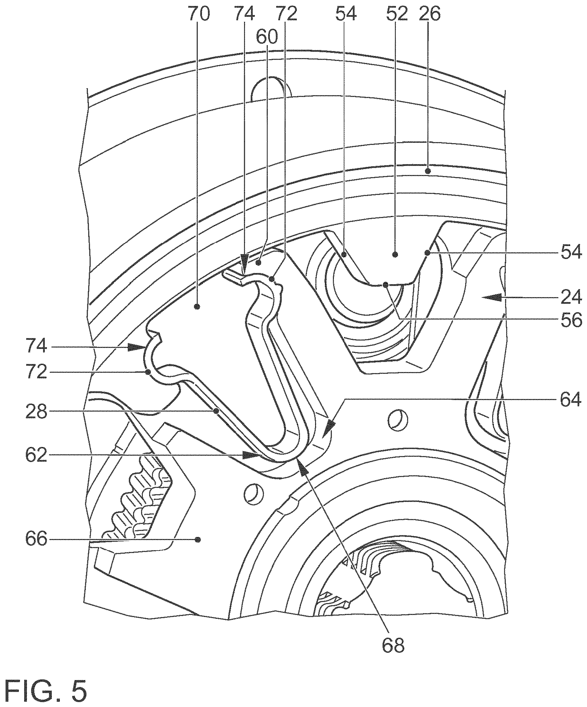

Figur 4 zeigt eine Explosionsdarstellung einer Vorrichtung 22 zur Messung eines Drehmoments in einem Force-Feedback-Aktuator für ein Steer-by-Wire-Lenksystem 10. Es handelt sich dabei um die gleiche Vorrichtung 22 wie in der Figur 3 dargestellt. Zu erkennen sind das Gehäuseelement 26, welches auch als ein besonderes Getriebeteil angesehen werden könnte, und ein Teil der Getriebevorrichtung 24, welches ebenfalls als ein besonderes weiteres Getriebeteil angesehen werden kann. Des Weiteren sind die einzelnen Federelemente 28 zu erkennen. Die beispielhaft gezeigte Anzahl von sechs Federelementen 28 kann beliebig variieren, wobei je nach Anzahl der Federelemente 28 entsprechend die Größe und Steifigkeit an einen jeweiligen Anwendungsfall angepasst werden kann. Zwischen den Federelementen 28 und dem Gehäuseelement 26 ist zudem eine Zwischenhaltevorrichtung 46 zu erkennen, welche optional die funktionelle Verbindung zwischen Gehäuseelement 26 und Getriebevorrichtung 24 mittels der Federelemente 28 unterstützt. Die Zwischenhaltevorrichtung 46 weist dabei sechs Stützelemente 48 auf, welche auf dem Umfang der Zwischenhaltevorrichtung 46 gleichmäßig verteilt sind. Etwa mittig auf jeder Seite befinden sich zudem jeweils Löcher 50, welche nicht näher dargestellte Befestigungsmittel aufnehmen können. Am Gehäuseelement 26 ist zudem ein Bewegungssensor 30 zu erkennen. Form und Ausgestaltung dieses Bewegungssensors 30 sind nur beispielhaft dargestellt und lassen sich im Rahmen der Funktionalität der Vorrichtung 22 beliebig variieren. Das Gehäuseelement 26 weist zudem eine Vielzahl von Anschlagelementen 52 auf, welche jeweils zwei abgeschrägte Seitenflächen 54 und eine Stirnseite 56 aufweisen. Die jeweiligen Stirnseiten 56 weisen dabei jeweils in den Innenraum 58. Der Innenraum 58 ist zumindest teilweise offen, sodass das Gehäuseelement 26 eine im Wesentlichen ringförmige Form aufweist. Die Federelemente 28 werden in der folgenden Figur 5 näher beschrieben, wobei die Federelemente 28 von den Figuren 4 und 5 identisch sind.

Figur 5 zeigt eine Detailansicht einer Vorrichtung 22 zur Messung eines Drehmoments in einem Force-Feedback-Aktuator für ein Steer-by-Wire-Lenksystem 10. Es handelt sich dabei um die gleiche Vorrichtung 22 wie in den Figuren 3 und 4 dargestellt. Zu erkennen ist ein Teilbereich des Gehäuseelements 26 mit einem Anschlagelement 52. Das Anschlagelement 52 weist zwei Seitenflächen 54 und eine Stirnseite 56 auf. Des Weiteren ist ein Teilbereich von einer Getriebevorrichtung 24 zu erkennen. An der Getriebevorrichtung 24 angeordnet ist ein Anlagenflächenelement 60 zu erkennen, an welchem wiederum ein Federelement 28 angeordnet ist. Das Federelement 28 ist in diesem Fall eine Blattfeder, welche im Wesentlichen parabelförmig ausgebildet ist. Mit anderen Worten ist die Blattfeder ein längliches Werkstück, welches vorzugsweise aus Metall ist. Ein unterer Bereich 62 des Federelements 28 ragt dabei in einen Ausbuchtungsbereich 64 von der Getriebevorrichtung 24. Dieser Ausbuchtungsbereich 64 wird rechts (bezogen auf die Bildebene) von dem Anlagenflächenelement 60 begrenzt und links von einem Rastelement 66, wobei das Rastelement 66 eine passende Geometrie zu dem Anschlagelement 52 aufweist, sodass das Rastelement 66 das Anschlagelement 52 aufnehmen könnte, wenn diese beiden zueinander positioniert wären. Der untere Bereich 62 des Federelements 28 weist besagte parabelförmige Form auf, wobei der Endbereich 68 einen Scheitelpunkt dieser parabelförmigen Form darstellt. Der Endbereich 68 ist dabei beabstandet zu der Getriebevorrichtung 24 und insbesondere zu dem Ausbuchtungsbereich 64 von der Getriebevorrichtung 24. Im oberen Bereich 70 des Federelements 28 ist die parabelförmige Form des Federelements 28 aufgeweitet und weist zudem an gegenüberliegenden Seiten jeweilige im Wesentlichen kreisförmige nach außen gerichtete Ausbuchtungen 72 auf, wobei auf der rechten Seite die kreisförmige Ausbuchtung 72 von einem Aufnahmebereich 74 von dem Anlagenflächenelement 60 aufgenommen wird und links von einem weiteren Aufnahmebereich 74 von dem Gehäuseelement 26, sodass das Federelement 28 aufgrund seiner aufgeweiteten Form hier eingespannt ist.

**Bezugszeichenliste**

| | |
|---|---|
| 10 | Steer-by-Wire-System |
| 12 | Lenkradaktor |
| 14 | Lenkeinrichtung |
| 16 | Lenkrad |
| 18 | Radaktor |
| 20 | Rad |
| 22 | Vorrichtung |
| 24 | Getriebevorrichtung |
| 25 | rückstellreversiblen Verstelleinrichtung |
| 26 | Gehäuseelement |
| 28 | Federelement |
| 30 | Bewegungssensor |
| 32 | Innenseite |
| 34 | Verjüngungsbereich |
| 36 | Antriebsvorrichtung |
| 38 | Stator |
| 40 | Rotor |
| 42 | Kopplungseinrichtung |
| 44 | Steuereinheit |
| 46 | Zwischenhaltevorrichtung |
| 48 | Stützelement |
| 50 | Löcher |
| 52 | Anschlagelement |

54    Seitenfläche
56    Stirnseite
58    Innenraum
60    Anlagenflächenelement
62    unterer Bereich
64    Ausbuchtungsbereich
66    Rastelement
68    Endbereich
70    oberer Bereich
72    Ausbuchtung
74    Aufnahmebereich

## Patentansprüche

1. Vorrichtung (22) zur Messung eines Drehmoments in einem Force-Feedback-Aktuator für ein Steer-by-Wire-Lenksystem (10) umfassend ein Gehäuseelement (26), eine Steuereinheit (44), eine Antriebsvorrichtung (36), eine Getriebevorrichtung (24), wobei die Getriebevorrichtung (24) ausgelegt ist mit einer Lenkeinrichtung (14) gekoppelt zu werden, wenigstens einen Bewegungssensor (30), welcher ausgelegt ist eine Bewegung der Getriebevorrichtung (24) relativ zu dem Gehäuseelement (26) zu detektieren und der Steuereinheit (44) ein aus der Bewegung resultierendes Bewegungssignal bereitzustellen, **dadurch gekennzeichnet, dass** die Getriebevorrichtung (24) mittels wenigstens einer rückstellreversiblen Verstelleinrichtung (25) mit wenigstens einer mechanischen Eigenschaft an dem Gehäuseelement (26) gekoppelt ist und dass mittels der wenigstens einen mechanischen Eigenschaft, welche bei der Bewegung der Getriebevorrichtung (24) wenigstens einen sich verändernden Zustandswert aufweist, und dem Bewegungssignal ein Drehmoment der Getriebevorrichtung (24) und somit einer verbindbaren Lenkeinrichtung (14) mittels der Steuereinheit (44) ermittelt werden kann.

2. Vorrichtung (22) nach Anspruch 1, wobei die rückstellreversible Verstelleinrichtung (25) wenigstens ein Federelement (28) umfasst und die wenigstens eine mechanische Eigenschaft eine Steifigkeit des wenigstens einem Federelements (28) ist.

3. Vorrichtung (22) nach Anspruch 1, wobei die rückstellreversible Verstelleinrichtung (25) wenigstens zwei Federelemente (28) umfasst und die wenigstens eine mechanische Eigenschaft eine Steifigkeit des jeweiligen einen Federelements (28) ist, wobei mittels einer Gesamtfedersteifigkeit aller Federelemente (28) und dem Bewegungssignal ein Drehmoment der Getriebevorrichtung (24) und somit einer verbindbaren Lenkeinrichtung (14) mittels der Steuereinheit (44) ermittelt werden kann.

4. Vorrichtung (22) nach einem der vorherigen Ansprüche, wobei der wenigstens eine Bewegungssensor (30) ein Winkelsensor ist.

5. Vorrichtung (22) nach einem der vorherigen Ansprüche, wobei das Gehäuseelement (26) wenigstens ein Anschlagelement (52) umfasst, wobei das Anschlagelement (52) ausgelegt ist bei einem erreichten maximalen Auslenkungswert der rückstellreversiblen Verstelleinrichtung (25) diese in einer benutzerdefinierten Position zu blockieren.

6. Vorrichtung (22) nach Anspruch 5, wobei die Steuereinheit (44) ausgelegt ist einen Getriebewirkungsgrad bei der Ermittlung des Drehmoments der Getriebevorrichtung (24) und somit einer verbindbaren Lenkeinrichtung (14) zu berücksichtigen.

7. Vorrichtung (22) nach einem der vorherigen Ansprüche, wobei die Getriebevorrichtung (24) ein Hohlradelement umfasst.

8. Vorrichtung (22) nach einem der vorherigen Ansprüche, wobei der Winkelsensor an dem Gehäuseelement (26) angeordnet ist, sodass eine Bewegung der Getriebevorrichtung (24) relativ zu dem Gehäuseelement (26) detektierbar ist.

9. Vorrichtung (22) nach einem der vorherigen Ansprüche, wobei das Federelement (28) eine Formblattfeder ist, wobei eine Geometrie der Formblattfeder in wenigstens einem Teilbereich an wenigstens einen Teilbereich einer Geometrie einer Anlagefläche des Gehäuseelements (26) angepasst ist, sodass eine Belastung der Formblattfeder in Abhängigkeit von einer Verdrehung der Formblattfeder beeinflusst wird.

10. Vorrichtung (22) nach einem der vorherigen Ansprüche 1 bis 8, wobei das Federelement (28) entweder eine Schraubfeder oder eine Formblattfeder ist.

## Claims

1. Apparatus (22) for measuring a torque in a force feedback actuator for a steer-by-wire steering system (10) comprising a housing element (26), a control unit (44), a drive apparatus (36), a gear apparatus (24), the gear apparatus (24) being designed to be coupled to a steering device (14), at least one movement sensor (30) which is designed to detect a movement of the gear apparatus (24) relative to the housing element (26) and to provide a movement signal which results from the movement to the control unit (44), **characterized in that** the gear apparatus (24) is coupled by way of at least one reversible-resetting adjusting device (25) with at least one mechanical property to the housing element (26), and **in that** a torque of the gear apparatus (24) and therefore of a connectable steering device (14) can be determined by means of the control unit (44) by means of the at least one mechanical property, which has at least one changing state value during the movement of the gear apparatus (24), and the movement signal.

2. Apparatus (22) according to Claim 1, the reversible-resetting adjusting device (25) comprising at least one spring element (28), and the at least one mechanical property being a stiffness of the at least one spring element (28).

3. Apparatus (22) according to Claim 1, the reversible-resetting adjusting device (25) comprising at least two spring elements (28), and the at least one mechanical property being a stiffness of the respective one spring element (28), it being possible for a torque of the gear apparatus (24) and therefore of a connectable steering device (14) to be determined by means of the control unit (44) by means of an overall spring stiffness of all the spring elements (28) and the movement signal.

4. Apparatus (22) according to one of the preceding claims, the at least one movement sensor (30) being an angle sensor.

5. Apparatus (22) according to one of the preceding claims, the housing element (26) comprising at least one stop element (52), the stop element (52) being designed to block the reversible-resetting adjusting device (25) in a user-defined position in the case of a maximum deflection value of this reversible-resetting adjusting device (25) being reached.

6. Apparatus (22) according to Claim 5, the control unit (44) being designed to take into consideration a gear efficiency during the determination of the torque of the gear apparatus (24) and therefore of a connectable steering device (14).

7. Apparatus (22) according to one of the preceding claims, the gear apparatus (24) comprising an internal gear element.

8. Apparatus (22) according to one of the preceding claims, the angle sensor being arranged on the housing element (26), with the result that a movement of the gear apparatus (24) relative to the housing element (26) can be detected.

9. Apparatus (22) according to one of the preceding claims, the spring element (28) being a shaped leaf spring, a geometry of the shaped leaf spring being adapted in at least one part region to at least one part region of a geometry of a bearing face of the housing element (26), with the result that loading of the shaped leaf spring is influenced in a manner which is dependent on a torsion of the shaped leaf spring.

10. Apparatus (22) according to one of the preceding Claims 1 to 8, the spring element (28) being either a helical spring or a shaped leaf spring.

## Revendications

1. Dispositif (22) pour mesurer un couple dans un actionneur à retour de force pour un système d'orientation par câbles (10) comprenant un élément de boîtier (26), une unité de commande (44), un dispositif d'entraînement (36), un dispositif de transmission (24), le dispositif de transmission (24) étant conçu pour être couplé à un appareil d'orientation (14), au moins un capteur de mouvement (30), qui est conçu pour détecter un mouvement du dispositif de transmission (24) par rapport à l'élément de boîtier (26) et pour fournir à l'unité de commande (44) un signal de mouvement résultant du mouvement, **caractérisé en ce que** le dispositif de transmission (24) est couplé à l'élément de boîtier (26) au moyen d'au moins un appareil de réglage réversible par réinitialisation (25) ayant au moins une propriété mécanique et **en ce qu'**au moyen de l'au moins une propriété mécanique, qui présente au moins une valeur d'état se modifiant lors du mouvement du dispositif de transmission (24), et du signal de mouvement, un couple du dispositif de transmission (24) et donc d'un appareil d'orientation pouvant être relié (14) peut être déterminé au moyen de l'unité de commande (44).

2. Dispositif (22) selon la revendication 1, dans lequel l'appareil de réglage réversible par réinitialisation (25) comprend au moins un élément de ressort (28) et l'au moins une propriété mécanique est une rigidité de l'au moins un élément de ressort (28).

3. Dispositif (22) selon la revendication 1, dans lequel l'appareil de réglage réversible par réinitialisation (25) comprend au moins deux éléments de ressort (28) et l'au moins une propriété mécanique est une rigidité de l'élément de ressort respectif (28), un couple du dispositif de transmission (24) et donc d'un appareil d'orientation pouvant être relié (14) pouvant être déterminé au moyen d'une rigidité de ressort totale de tous les éléments de ressort (28) et du signal de mouvement au moyen de l'unité de commande (44) .

4. Dispositif (22) selon l'une quelconque des revendications précédentes, dans lequel l'au moins un capteur de mouvement (30) est un capteur angulaire.

5. Dispositif (22) selon l'une quelconque des revendications précédentes, dans lequel l'élément de boîtier (26) comprend au moins un élément de butée (52), l'élément de butée (52) étant conçu pour bloquer l'appareil de réglage réversible par réinitialisation (25) dans une position définie par l'utilisateur lorsqu'une valeur de déviation maximale de celui-ci est atteinte.

6. Dispositif (22) selon la revendication 5, dans lequel l'unité de commande (44) est conçue pour prendre en compte un rendement de transmission lors de la détermination du couple du dispositif de transmission (24) et donc d'un appareil d'orientation pouvant être relié (14).

7. Dispositif (22) selon l'une quelconque des revendications précédentes, dans lequel le dispositif de transmission (24) comprend un élément de couronne.

8. Dispositif (22) selon l'une quelconque des revendications précédentes, dans lequel le capteur angulaire est agencé sur l'élément de boîtier (26), de telle sorte qu'un mouvement du dispositif de transmission (24) par rapport à l'élément de boîtier (26) peut être détecté.

9. Dispositif (22) selon l'une quelconque des revendications précédentes, dans lequel l'élément de ressort (28) est un ressort à lame de forme, dans lequel une géométrie du ressort à lame de forme est adaptée dans au moins une zone partielle à au moins une zone partielle d'une géométrie d'une surface d'appui de l'élément de boîtier (26), de telle sorte qu'une charge du ressort à lame de forme est influencée en fonction d'une rotation du ressort à lame de forme.

10. Dispositif (22) selon l'une quelconque des revendications 1 à 8 précédentes, dans lequel l'élément de ressort (28) est soit un ressort hélicoïdal, soit un ressort à lame de forme.

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60303081 T2
- US 20020108804 A1
- DE 10159330 A1
- DE 102014222805 A1
- DE 10051187 A1